# FASCICULE DE BREVET EUROPEEN

(11) **EP 4 656 451 B1**
(45) Date de publication et mention de la délivrance du brevet: **25.11.2026**
(21) Numéro de dépôt: 24188675.3
(22) Date de dépôt: 15.07.2024
(51) Int. Cl.: B60M 1/28, B60M 1/02

(54) **DISPOSITIF DE PERCHAGE AUTOMATIQUE POUR CATENAIRE**
AUTOMATISCHE FAHRLEITUNGS-ERDUNGS-VORRICHTUNG
AUTOMATIC CATENARY PERCHING DEVICE

(43) Date de publication de la demande: 03.12.2025
(73) Titulaire: John Cockerill SA, 4100 Seraing (BE)
(72) Inventeur: DIDON, Florian, 57640 BETTELAINVILLE (FR); ORDAS, Alexandre, 57940 METZERVISSE (FR); MORELLATO, Stéphane, 57420 VERNY (FR)
(74) Mandataire: AWA Benelux

(56) Documents cités:
- EP-A1- 3 995 353
- FR-A1- 3 142 714
- JP-A- 2023 091 247

## Description

### Objet de l'invention

La présente invention se rapporte au domaine des caténaires de voies de chemin de fer électrique et en particulier aux équipements de maintenance de celles-ci. Plus précisément, la présente invention concerne un dispositif automatique de vérification d'absence de tension et de mise à la terre des caténaires, assurant à la fois le positionnement correct de l'équipement de contrôle de présence tension et de la perche de mise à la terre lors d'une opération de maintenance.

En particulier, le dispositif assure la consignation électrique de la caténaire, permettant ainsi l'accès à l'installation dans le respect des normes applicables localement.

### Etat de la technique

Lors d'une intervention sur une voie de chemin de fer, il peut être nécessaire de mettre à la terre une caténaire. Il existe différents dispositifs permettant de mettre à la terre des caténaires tout en permettant aux trains de circuler sur la voie de chemin de fer afin d'éviter que la circulation ne soit interrompue.

Le document FR3041821A1 divulgue un dispositif de positionnement dans une position de dégagement d'un dispositif de mise à la terre d'une caténaire d'une voie de chemin de fer, qui permet de limiter ou de supprimer la gêne à la circulation ferroviaire lors d'une opération de maintenance. Le dispositif de positionnement comprend une perche de positionnement qui comporte à une extrémité un organe présentant un moyen d'accueil apte à entraîner une perche d'installation et un câble électrique d'un dispositif de mise à la terre, et un moyen d'accrochage apte à retenir l'organe suspendu à un élément externe en bordure de la voie de chemin de fer. Le dispositif de positionnement permet ainsi à un opérateur d'installer le dispositif de mise à la terre sur la caténaire, puis de positionner la perche d'installation et le câble électrique en dehors de la voie de chemin de fer, en accrochant l'organe sur un poteau de caténaire ou tout autre poteau classiquement présent le long de la voie de chemin de fer. L'opérateur peut ensuite désolidariser la perche de positionnement de l'organe et la réutiliser pour une autre application.

Le document FR3120574A1 divulgue un dispositif similaire, mais permettant de simplifier et de motoriser le positionnement de la perche et de garantir son contact avec la catenaire.

Le document CN112590624B a pour but de fournir un dispositif de mise à la terre automatique qui réalise les fonctions de contrôle électrique de l'ouverture et de la fermeture du commutateur de mise à la terre, d'inspection électrique et de décharge automatiques, et de détection intelligente de l'état du commutateur de mise à la terre. Le dispositif comprend un transformateur de tension, un circuit de détection de l'état du commutateur de mise à la terre, un circuit d'inspection électrique, un circuit de décharge automatique et une unité de surveillance. Le procédé de commande consiste à définir des seuils de tension pour la caténaire, à détecter la tension de la caténaire, à décharger la caténaire si nécessaire, à fermer le commutateur de mise à la terre, à contrôler la tension et le courant de sortie d'une alimentation électrique réglable, et à juger si la mise à la terre est fiable.

Le document EP3995353A1 divulgue un dispositif de perchage pour la mise à terre d'une caténaire ferroviaire.

### Buts de l'invention

La présente invention vise à fournir une solution permettant l'automatisation de la vérification d'absence de tension et de la mise à la terre de caténaires. Le but poursuivi est d'assurer un positionnement correct à la fois de l'équipement de contrôle de présence tension ainsi que de la perche de mise à la terre lorsqu'une opération de maintenance est prévue.

Un autre but poursuivi par l'invention est de rendre accessible de manière fiable et sécuritaire l'installation qui doit être maintenue. Le dispositif permet une consignation électrique automatisée de la caténaire dans le respect des normes applicables localement.

Un autre but encore poursuivi par l'invention est de fournir un dispositif automatique, à intervention humaine limitée, tout en proposant un dispositif simple et ergonomique.

Tout le matériel utilisé dans le dispositif de l'invention, et qui se trouve au contact de la caténaire et de liaison équipotentielle est soumis à agrément, dépendant de l'exploitant du réseau (SNCF, SNCB, par exemple).

### Principaux éléments caractéristiques de l'invention

La présente invention se rapporte à un dispositif de perchage automatique pour vérification d'absence de tension et mise au rail d'une caténaire de voie ferroviaire, le dispositif comprenant un mat sur lequel sont compris :
- un premier bras potence dit « de vérification d'absence de tension » comprenant une perche de vérification d'absence de tension sur laquelle est positionné un dispositif de vérification d'absence de tension équipé d'un crochet ;
- un second bras potence dit « de mise au rail » comprenant une perche de mise au rail avec une tête de perche et un câble de liaison équipotentielle permettant, en utilisation, de relier la caténaire au rail de la voie ferroviaire;
- un système d'automatisation comprenant un ensemble de capteurs de sécurité des deux bras potence et un automate de sécurité pour contrôler la position des bras potence ;
chaque bras potence étant relié au mat par un vérin pivotant et un vérin élévateur permettant de modifier la position des bras potence de manière indépendante à l'aide de l'automate de sécurité afin de faire passer d'une position de repos à une position de travail la perche de vérification d'absence de tension et/ou la perche de mise au rail, la position de travail étant une position dans laquelle le dispositif de vérification d'absence de tension peut contrôler la tension de la caténaire et le câble de liaison peut mettre à la terre la caténaire lors d'une opération de maintenance.

Selon des formes d'exécution préférées de l'invention, le dispositif comprend en outre une des caractéristiques suivantes, ou une combinaison appropriée de celles-ci :
- les vérins comprennent des actionneurs pour la mise en mouvement des bras potence ;
- les capteurs de sécurité sont des capteurs de position des bras potence et/ou des perches, ou des capteurs de fin de course des vérins ;
- les capteurs de sécurité et le dispositif de VAT sont connectés à l'automate de sécurité afin de lui fournir les signaux à traiter pour connaitre les positions des deux bras potence, l'état de fonctionnement du dispositif de VAT, et la confirmation de l'absence de tension sur la caténaire ;
- le dispositif de perchage automatique comporte un boitier étanche à atmosphère contrôlée pour garantir les conditions de stockage nécessaires du dispositif de vérification d'absence de tension ;
- le dispositif de VAT est équipé d'une fonction d'autotest permettant de s'assurer du bon fonctionnement du dispositif de VAT, de l'état de la batterie d'alimentation du dispositif de VAT et de l'état du câble de liaison à la terre ;
- le dispositif de perchage automatique comprend une passerelle de maintenance permettant l'accès au dispositif de perchage automatique ;
- le dispositif de perchage automatique comprend une échelle d'accès pour accéder à la passerelle de maintenance ;
- le dispositif de perchage automatique comprend un système de verrouillage de l'échelle qui empêche l'accès à la passerelle tant que la procédure de perchage n'est pas correctement terminée ;
- le câble de liaison équipotentielle est un câble de section 95mm² homologué faisant la liaison équipotentielle, en utilisation, entre la perche de mise au rail et le rail ;
- le dispositif de perchage automatique comprend une broche métallique placée au niveau de la position de repos avec liaison équipotentielle avec le rail, pour les phases d'autotest du VAT ;
- le dispositif de perchage automatique comprend une liaison avec un automate déporté pour qu'un opérateur puisse communiquer avec l'automate de sécurité.

La présente invention concerne également un procédé de passage d'un bas potence du dispositif de perchage automatique de la position de repos à la position de travail.

La présente invention se rapporte également à une méthode de mise en sécurité de la voie à l'aide du dispositif de perchage automatique.

### Brève description des figures

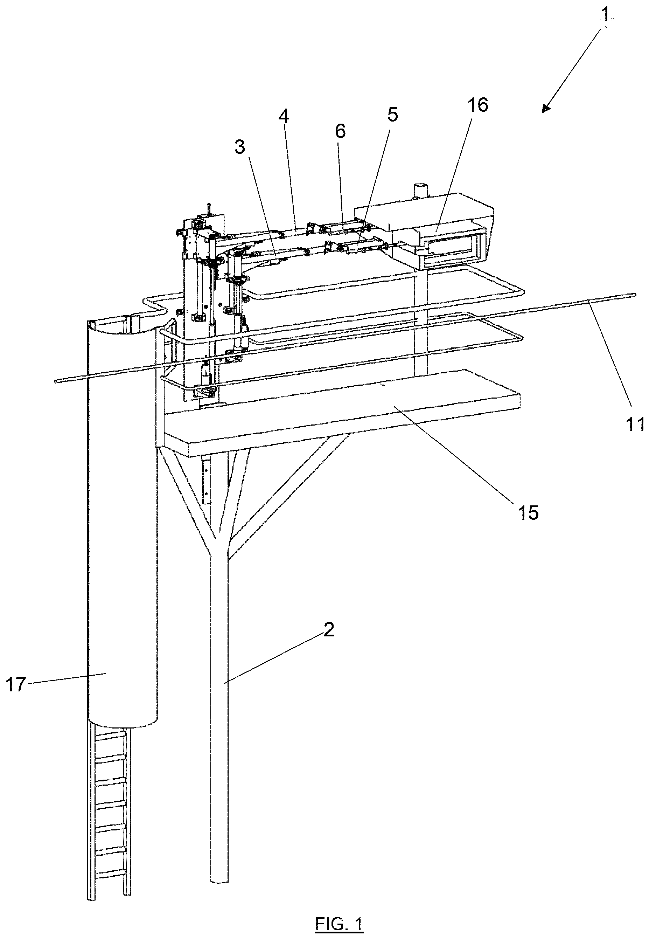

La figure 1 représente une vue en perspective d'un exemple de dispositif selon la présente invention, le dispositif de perchage étant en position de repos et équipé d'une passerelle de maintenance et de son échelle d'accès à crinoline, ainsi que d'un boitier étanche pour protéger le dispositif de vérification d'absence de tension.

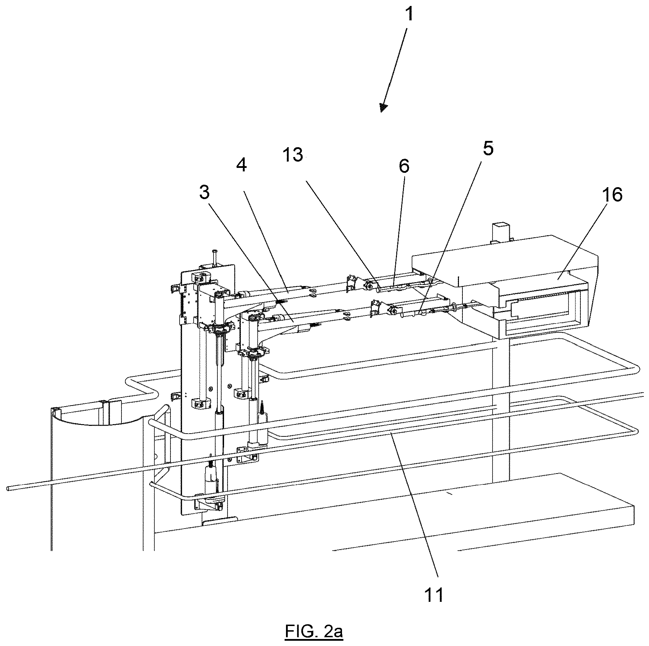

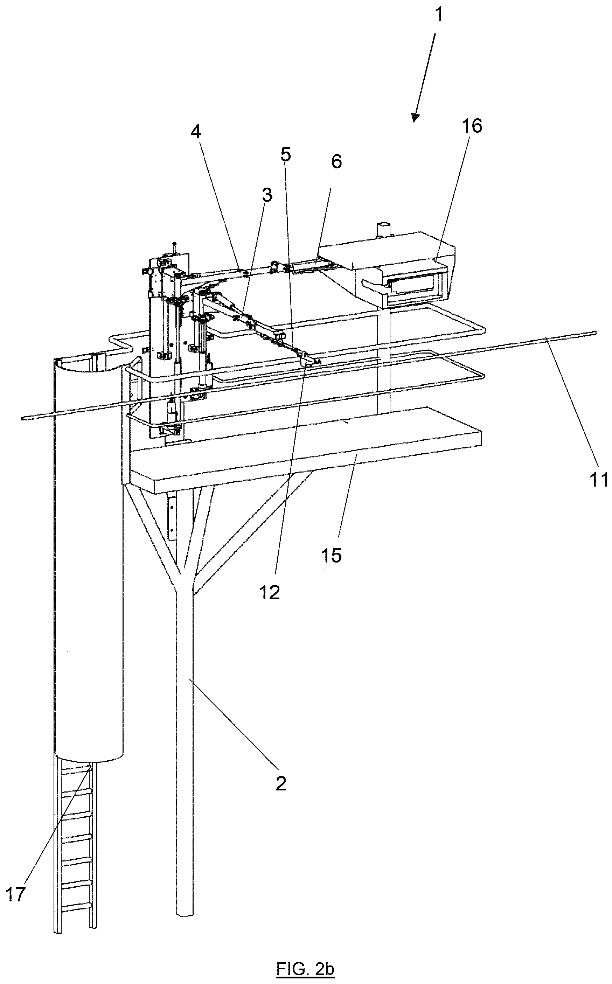

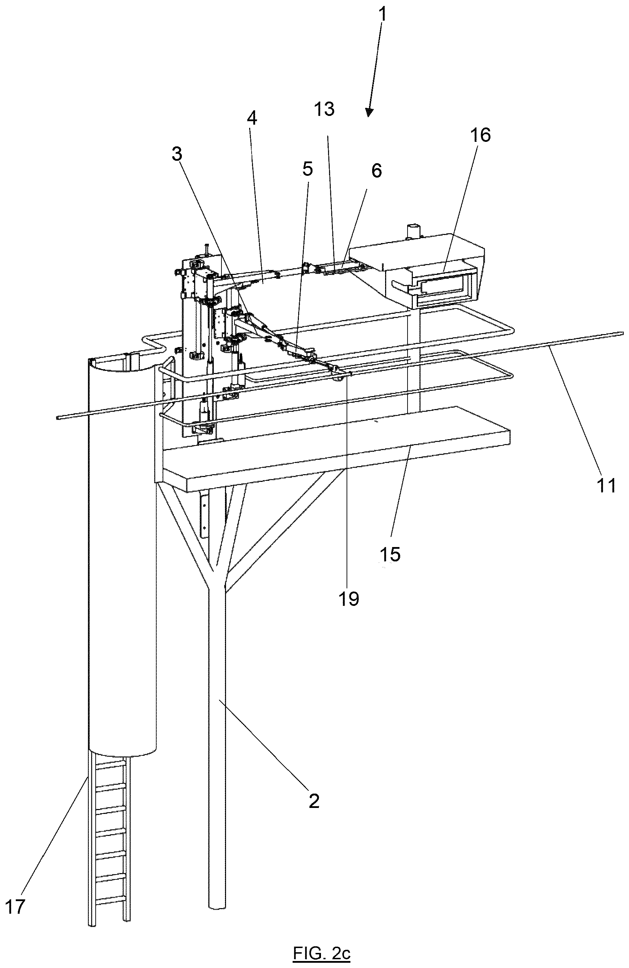

Les figures 2A à 2C représentent les étapes pour passer de la position de repos à la position de travail d'un bras potence d'un exemple de dispositif selon l'invention. La figure 2A correspond à la position de repos dans laquelle les deux bras potence sont parallèles aux rails et à la caténaire. La figure 2B correspond à une position intermédiaire dans laquelle le bras potence est pivoté par un vérin pour se trouver en position perpendiculaire aux rails et à la caténaire, mais le bras potence est situé à une certaine distance verticale sans être en contact avec la caténaire. La figure 2C correspond à la position de travail dans laquelle le bras potence est en contact avec la caténaire, suite à un abaissement de ce dernier par un vérin.

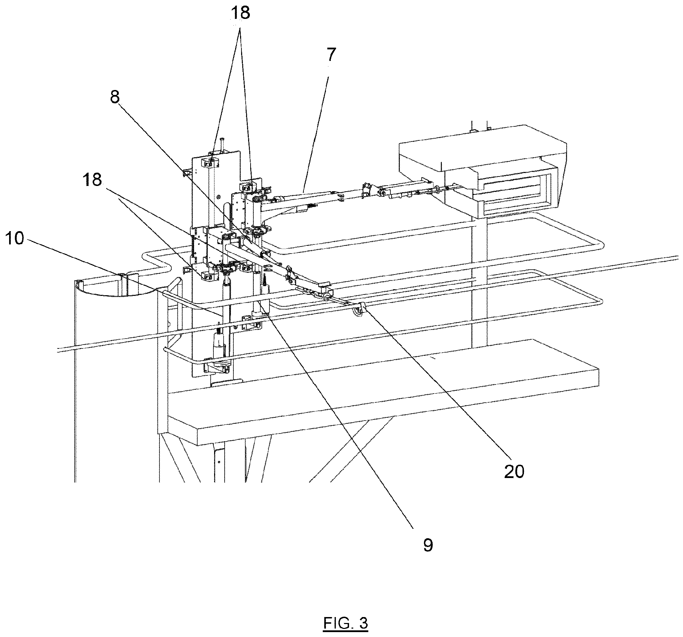

La figure 3 représente une perspective agrandie d'un exemple de dispositif selon la présente invention, l'un des bras potence étant en position de repos et l'autre bras potence étant en position de travail.

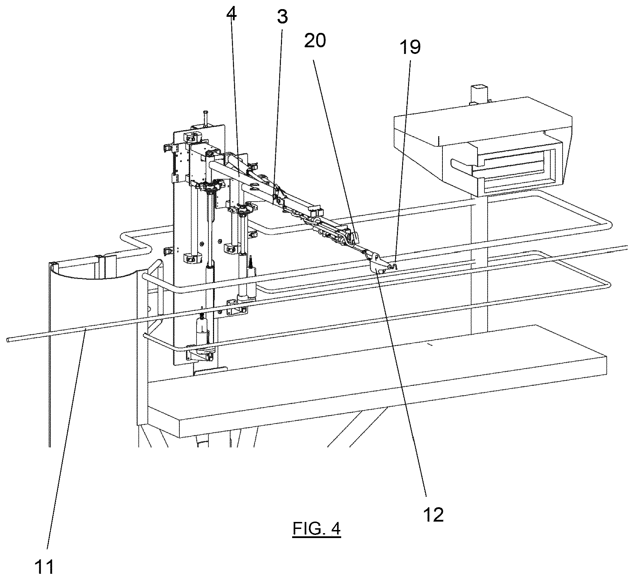

La figure 4 représente une perspective agrandie d'un exemple de dispositif selon la présente invention, les bras potences étant en position intermédiaire (à savoir en position perpendiculaire aux rails et à la caténaire, mais étant situés à une certaine distance verticale de la caténaire sans être en contact avec celle-ci).

### Description d'une forme d'exécution préférée de l'invention

Un exemple du dispositif de perchage automatique 1 selon la présente invention est représenté dans les figures 1 à 4. Le dispositif de perchage automatique 1 permet d'une part la vérification d'absence de tension sur la caténaire 11, et d'autre part, la mise au rail de la caténaire 11, tout cela de manière automatisée afin de faciliter l'opération et de maintenir les opérateurs en sécurité.

Pour se faire, le dispositif de perchage 1 comprend un premier bras potence 3, appelé bras potence « de vérification d'absence de tension (ou VAT) » et un second bras potence 4 appelé bras potence «de mise au rail ». Les deux bras potence 3,4 sont fixés sur un mât 2, tel que représenté sur la figure 1, à une hauteur déterminée pour avoir accès à la caténaire 11 tout en restant en dehors du gabarit cinématique majoré du matériel roulant. Les bras potence 3, 4 sont mobiles et peuvent se déplacer entre une position dite de repos, dans laquelle les bras 3, 4 sont parallèles à la caténaire 11 et aux rails de la voie ferrée, et une position dite de travail, dans laquelle les bras 3, 4 sont perpendiculaires à la caténaire 11 et de manière à ce que le dispositif de perchage 1 soit en contact avec la caténaire 11. Chaque bras potence 3, 4 peut être déplacé de manière indépendante, et se trouver dans sa position de repos ou de travail indépendamment de l'autre bras potence 3, 4, comme illustré sur les figures 2B et 2C.

Le premier bras potence 3 comprend une perche de vérification d'absence de tension 5, en extrémité de laquelle est positionné un dispositif de vérification d'absence de tension 12 qui mesure la tension résiduelle de la caténaire 11. Le dispositif de vérification d'absence de tension 12 est équipé à son extrémité d'un crochet 19 pour venir en contact avec la caténaire 11. Lorsque ce premier bras potence 3 est en position de travail, le dispositif de vérification d'absence de tension 12 est en contact avec la caténaire 11.

Le second bras potence 4 de mise au rail comprend une perche de mise au rail 6, sur laquelle est fixé un câble de liaison équipotentielle 13. La perche 6 a, à son extrémité, une tête de perche 20 pour venir en contact avec la caténaire 11. Lorsque ce second bras potence 4 est en position de travail, le câble de liaison 13 relie la caténaire 11 au rail de la voie ferroviaire afin de mettre au rail et donc à la terre la caténaire 11. Ceci permet de protéger les opérateurs des tensions résiduelles ainsi qu'en cas de remise sous tension accidentelle de la caténaire. Le câble de liaison équipotentielle 13 (homologué par le service en charge du réseau caténaires) peut par exemple être un câble de section 95mm², suivant les exigences imposées.

Le dispositif de VAT 12 est mécaniquement indépendant du dispositif de mise au rail pour permettre le repli du dispositif de VAT 12 après les tests. De préférence, le dispositif de VAT 12 est stocké dans un boitier étanche 16, à atmosphère contrôlée. Le boîtier étanche peut être chauffé et climatisé avec une gestion de la température et de l'hygrométrie. Une mesure de la température et de l'hygrométrie intérieures et extérieures peut être réalisée pour obtenir un asservissement du chauffage, du refroidissement et de la ventilation, permettant garantir des conditions de température et d'hygrométrie optimales.

La mobilité des bras potence est réalisée à l'aide de vérins, de préférence des vérins à vis électrique, qui sont pilotés par des actionneurs. Chaque bras potence 3, 4 est relié au mat 2 par un vérin pivotant 7, 8 et un vérin élévateur 9, 10. Le premier vérin pivotant 7 permet de faire pivoter le premier bras potence 3 de vérification d'absence de tension, tandis que le second vérin pivotant 8 permet de faire pivoter le second bras potence 4 de mise au rail. Le premier vérin élévateur 7 permet de translater verticalement le premier bras potence 3 de vérification d'absence de tension, tandis que le second vérin élévateur 8 permet de translater verticalement le second bras potence 4 de mise au rail. La position des bras peut être modifiée de manière indépendante via les différents vérins.

Les figures 2A à 2C représentent le passage d'un bras potence 3, 4 de la position de repos à la position de travail. Le bras potence 3, 4 doit passer par une position intermédiaire illustrée en figure 2B. En figure 2A les bras potence 3, 4 sont positionnés en position de repos. Ensuite, lorsque l'opérateur désire mettre en sécurité la caténaire 11 de la voie concernée, le vérin pivotant 7, 8 va faire pivoter le bras potence 3, 4 en position intermédiaire de manière à être perpendiculaire à la caténaire 11 pour positionner la tête de perche 5, 6 par-dessus la caténaire 11, sans qu'elle ne soit en contact avec la caténaire 11. Une fois en position intermédiaire avec la tête de perche au-dessus de la caténaire 11, le bras potence 7, 8 devra être descendu en position de travail pour que la tête de perche 5, 6 entre en contact avec la caténaire 11. Ceci est réalisé à l'aide de l'un des vérins élévateurs 9, 10. Les étapes peuvent être commandées de manière indépendante et automatique, et peuvent être réalisées pour chacun des ensembles bras potence/perche. Les étapes sont réalisées en sens inverse pour faire passer ces ensembles vers la position de repos.

Afin d'automatiser la procédure de perchage, le dispositif de perchage 1 comprend un système d'automatisation pour commander la position des bras potence 3, 4 et recevoir des informations du dispositif de VAT 12. Ce système d'automatisation comprend un ensemble de capteurs de sécurité 18 et un automate de sécurité 14. Les capteurs de sécurité 18 sont connectés à l'automate de sécurité 14 afin de lui fournir les signaux à traiter pour connaitre les positions des deux bras et perches. Le système d'automatisation permet de piloter le dispositif de perchage 1, grâce à l'automate de sécurité 14 qui peut recevoir un ensemble de données transmises par le dispositif de VAT 12 ainsi que les différents capteurs. Le rôle de l'automate de sécurité 14 est donc de collecter et d'analyser un ensemble de données (position des perches, état de fonctionnement du dispositif de VAT, confirmation de l'absence de tension sur la caténaire, ect...) avant d'enclencher les différentes étapes de la procédure de perchage de la voie à sécuriser pour finalement restituer une information sécurisée de type « caténaire hors tension et mise au rail », « présence tension caténaire », « défaut batterie VAT », etc. Cette information, une fois traitée par exemple par un automate déporté, permettra d'autoriser ou non les travaux à réaliser sur la voie. Par exemple, la mise au rail de la caténaire 11 doit être réalisée impérativement lorsque celle-ci est hors tension, ce qui sera contrôlé par l'automate 14 via le dispositif VAT 12, et ce qui sera déterminant pour lancer l'étape suivante de mise au rail. L'automate de sécurité 14 permet dès lors de commander le déplacement de chacun des bras potence 3,4 de la position de repos à la position de travail et vice versa, via les vérins. Ceci permet de faire passer la perche de mise au rail 6 et la perche de vérification d'absence de tension 5 de la position de repos à la position de travail, et vice versa, et ce de manière indépendante.

De préférence, conformément aux consignes du constructeur, le dispositif de VAT 12 est testé avant la procédure de mise en place de celui-ci sur la caténaire 11. Pour ce faire, le dispositif de VAT 12 est équipé d'une commande à distance «autotest» permettant de s'assurer du bon fonctionnement de l'appareil, de l'état de la batterie d'alimentation du dispositif et de l'état du câble de liaison à la terre.

Les positions des bras potence 3, 4 sont contrôlées par les capteurs de sécurité 18, qui peuvent être des capteurs de position des bras potence 3, 4 et/ou des perches, et/ou des capteurs de fin de course des vérins par exemple.

Dans le cas où la caténaire 11 viendrait à se détendre, le ou les capteurs de position des perches vont détecter la baisse de la tête de perche 20 ou du crochet 19(suivant si la VAT et ou la mise au rail est déployée). Le ou les vérins élévateur(s) 9, 10 sont alors actionnés jusqu'à retrouver la position de contact sécuritaire entre la tête de perche 20 ou crochet 19 et la caténaire 11.

Le dispositif de perchage 1 selon l'invention peut comprendre une passerelle de maintenance 15 qui permet l'accès des opérateurs au dispositif de perchage automatique 1 et aux différents équipements pour réaliser les contrôles périodiques nécessaires des éléments en contact avec la caténaire 11 ainsi que la maintenance du système de perchage. Une échelle d'accès 17 permet d'accéder à la passerelle de maintenance 15. De préférence, un système électromécanique de verrouillage de l'échelle 17 peut être prévu. Ceci permet d'empêcher l'accès des opérateurs à la passerelle 15 tant que la procédure de perchage n'est pas correctement terminée, ou si l'opérateur n'a pas les autorisations.

Le dispositif de perchage 1 peut également comprendre une broche d'équipotentialité placée au niveau de la position de repos, avec liaison équipotentielle avec le rail, pour les phases d'autotest du dispositif de VAT 12.

Un automate déporté peut être prévu afin que l'opérateur puisse communiquer avec l'automate de sécurité 14, échanger des informations sur les statuts et commander des perchages de voies.

Un coffret électrique de pilotage de l'automate de sécurité 14 peut également être prévu en bas du mat 2, accessible à l'opérateur.

### Exemple de procédure d'utilisation du dispositif

Lorsqu'une maintenance doit être réalisée sur une partie de voir ferrée, les étapes pour mise en sécurité de la voie à l'aide du dispositif de perchage de l'invention sont les suivantes :
- l'opérateur fait une demande de mise en sécurité de la voie sur laquelle il veut intervenir, par exemple via l'automate déporté, vers l'automate de sécurité 14 ;
- l'automate de sécurité 14 confirme que la caténaire 11 est hors tension, et envoie un ordre de vérification d'absence de tension et de perchage au dispositif de perchage 1;
- l'automate de sécurité 14 lance de préférence une procédure d'autotest du dispositif de vérification d'absence de tension 12 et vérifie que ce dernier est opérationnel ;
- si le résultat de l'autotest n'est pas conforme, l'automate de sécurité 14 stoppe la procédure de VAT et de perchage et envoie l'information avec le détail du problème rencontré durant l'autotest (batterie VAT faible, absence de liaison avec la terre/ rail, ...)
- le bras potence 4 supportant le dispositif de vérification d'absence de tension 12 se déploie au-dessus de la caténaire 11, puis viens ensuite en contact avec celle-ci grâce aux deux vérins électriques du bras potence de VAT 8 et aux capteurs de sécurité 18 pour ajuster la position et assurer le contact correct avec la caténaire 11 ;
- le dispositif de vérification d'absence de tension 12 mesure la tension résiduelle sur la caténaire 11 et envoie le résultat à l'automate de sécurité 14;
- l'automate de sécurité 14 lance de préférence une procédure d'autotest du dispositif de vérification d'absence de tension 12 et vérifie que ce dernier est toujours opérationnel ;
- si le résultat de la VAT et de l'autotest après mesure sont corrects, le bras potence 3 supportant la perche de mise au rail 5 se déploie au-dessus de la caténaire 11 et viens ensuite en contact avec celle-ci grâce aux deux vérins électriques du bras potence de la perche de mise au rail 7, 9, et aux capteurs de sécurité 18 pour ajuster la position et assurer le contact correct avec la caténaire 11;
- si le résultat de la VAT est incorrect, l'information est transmise à l'automate de sécurité 14, informant l'opérateur par communication avec l'automate déporté. Dans ce cas, l'accès à la plateforme et les travaux sur la voie sont interdit.
Ce séquençage automatique correspond au mode opératoire manuel de sécurisation d'une voie électrifiée conformément aux procédures en vigueurs.

### Liste des symboles de référence

| | |
|---|---|
| 1 | Dispositif de perchage automatique |
| 2 | Mat |
| 3 | Bras potence de vérification d'absence de tension (VAT) |
| 4 | Bras potence de mise au rail |
| 5 | Perche de vérification d'absence de tension |
| 6 | Perche de mise au rail |
| 7 | Vérin pivotant du bras potence de VAT |
| 8 | Vérin pivotant du bras potence de mise au rail |
| 9 | Vérin élévateur du bras potence de VAT |
| 10 | Vérin élévateur du bras potence de mise au rail |
| 11 | Caténaire |
| 12 | Dispositif de vérification d'absence de tension (VAT) |
| 13 | Câble de liaison équipotentielle de la perche de mise au rail |
| 14 | Système automatisé (automate de sécurité) |
| 15 | Passerelle de maintenance |
| 16 | Boitier étanche du dispositif de VAT |
| 17 | Echelle d'accès et sa crinoline |
| 18 | Capteurs de sécurité |
| 19 | Crochet de contact entre le dispositif de VAT et la caténaire |
| 20 | Tête de perche |

## Revendications

1. Dispositif de perchage automatique (1) pour vérification d'absence de tension et mise au rail d'une caténaire (11) de voie ferroviaire, le dispositif (1) comprenant un mat (2) sur lequel sont compris :
- un premier bras potence (3) dit « de vérification d'absence de tension » comprenant une perche de vérification d'absence de tension (5) sur laquelle est positionné un dispositif de vérification d'absence de tension, dispositif de VAT, (12) équipé d'un crochet (19) ;
- un second bras potence (4) dit « de mise au rail » comprenant une perche de mise au rail (6) avec une tête de perche (20) et un câble de liaison équipotentielle (13) permettant, en utilisation, de relier la caténaire (11) au rail de la voie ferroviaire;
- un système d'automatisation comprenant un ensemble de capteurs de sécurité (18) des deux bras potence (3, 4) et un automate de sécurité (14) pour contrôler la position des bras potence (3, 4) ;
chaque bras potence (3, 4) étant relié au mat (2) par un vérin pivotant (7, 8) et un vérin élévateur (9, 10) permettant de modifier la position des bras potence (3, 4) de manière indépendante à l'aide de l'automate de sécurité (14) afin de faire passer d'une position de repos à une position de travail la perche de vérification d'absence de tension (5) et/ou la perche de mise au rail (6), la position de travail étant une position dans laquelle le dispositif de vérification d'absence de tension (12) peut contrôler la tension de la caténaire (11) et le câble de liaison (13) peut mettre à la terre la caténaire (11) lors d'une opération de maintenance.

2. Dispositif de perchage automatique (1) selon l'une quelconques des revendications précédentes, **caractérisé en ce que** les vérins (7, 8, 9, 10) comprennent des actionneurs pour la mise en mouvement des bras potence (3, 4).

3. Dispositif de perchage automatique (1) selon l'une quelconques des revendications précédentes, **caractérisé en ce que** les capteurs de sécurité (18) sont des capteurs de position des bras potence (3, 4) et/ou des perches (5, 6), ou des capteurs de fin de course des vérins (7, 8, 9, 10).

4. Dispositif de perchage automatique (1) selon l'une quelconques des revendications précédentes, **caractérisé en ce que** les capteurs de sécurité (18) et le dispositif de VAT (12) sont connectés à l'automate de sécurité (14) afin de lui fournir les signaux à traiter pour connaitre les positions des deux bras potence (3, 4), l'état de fonctionnement du dispositif de VAT (12), et la confirmation de l'absence de tension sur la caténaire (11).

5. Dispositif de perchage automatique (1) selon la revendication 1, **caractérisé en ce qu'**il comporte un boitier étanche (16) à atmosphère contrôlée pour garantir les conditions de stockage nécessaires du dispositif de vérification d'absence de tension (12).

6. Dispositif de perchage automatique (1) selon la revendication 1, **caractérisé en ce que** le dispositif de VAT (12) est équipé d'une fonction d'autotest permettant de s'assurer du bon fonctionnement du dispositif de VAT (12), de l'état de la batterie d'alimentation du dispositif de VAT (12) et de l'état du câble de liaison à la terre (13).

7. Dispositif de perchage automatique (1) selon l'une quelconques des revendications précédentes, **caractérisé en ce qu'**il comprend une passerelle de maintenance (15) permettant l'accès au dispositif de perchage automatique (1).

8. Dispositif de perchage automatique (1) selon la revendication 7 **caractérisé en ce qu'**il comprend une échelle d'accès (17) pour accéder à la passerelle de maintenance (15).

9. Dispositif de perchage automatique (1) selon la revendication 8 **caractérisé en ce qu'**il comprend un système de verrouillage de l'échelle (17) qui empêche l'accès à la passerelle (15) tant que la procédure de perchage n'est pas correctement terminée.

10. Dispositif de perchage automatique (1) selon l'une quelconque des revendications précédentes, **caractérisé en ce que** le câble de liaison équipotentielle (13) est un câble de section 95mm² homologué faisant la liaison équipotentielle, en utilisation, entre la perche de mise au rail (5) et le rail.

11. Dispositif de perchage automatique (1) selon la revendication 10 **caractérisé en ce qu'**il comprend une broche métallique placée au niveau de la position de repos avec liaison équipotentielle avec le rail, pour les phases d'auto-test du VAT.

12. Dispositif de perchage automatique (1) selon l'une quelconques des revendications précédentes, **caractérisé en ce qu'**il comprend une liaison avec un automate déporté pour qu'un opérateur puisse communiquer avec l'automate de sécurité (14).

13. Procédé de passage d'un bras potence (3, 4) du dispositif de perchage automatique (1) selon l'une des revendications 1 à 12, de la position de repos à la position de travail, comprenant les étapes suivantes :
- les bras potence (3, 4) sont positionnés en position de repos ;
- le vérin pivotant (7, 8) fait pivoter le bras potence (3, 4) en position intermédiaire de manière à ce que le bras potence (3,4) perpendiculaire à la caténaire (11), la perche (5, 6) étant positionnée par-dessus la caténaire (1) sans être en contact avec la caténaire (11) ;
- le vérin élévateur (9, 10) fait descendre par translation verticale le bras potence (7, 8) en position de travail pour que la tête de perche (19) soit en contact avec la caténaire (11) ;
les étapes du procédé pouvant être commandées de manière indépendante, et également en sens inverse pour faire passer le bras potence (3, 4) de la position de travail vers la position de repos.

14. Méthode de mise en sécurité de la voie à l'aide du dispositif de perchage automatique (1) selon l'une des revendications 1 à 12, comprenant les étapes suivantes :
- demande de mise en sécurité de la voie sur laquelle l'intervention doit être faite, par exemple via l'automate déporté, vers l'automate de sécurité (14) ;
- confirmation par l'automate de sécurité (14) que la caténaire (11) est hors tension, et envoi d'un ordre de vérification d'absence de tension et de perchage au dispositif de perchage (1) ;
- de préférence, procédure d' autotest du dispositif de vérification d'absence de tension (12) par l'automate de sécurité (14);
- déploiement du bras potence (3) supportant le dispositif de vérification d'absence de tension (12) au-dessus de la caténaire (11) grâce au vérin pivotant (7) du bras potence de VAT (3) ;
- mise en contact de la perche de VAT (5) avec la caténaire (11) grâce au vérin d'élévation (9) du bras potence de VAT (3), et aux capteurs de sécurité (18) pour ajuster le guidage et assurer le placement correct ;
- mesure de la tension résiduelle sur la caténaire (11) par le dispositif de vérification d'absence de tension (12) et envoi du résultat à l'automate de sécurité (14);
- si le résultat de la VAT est correct, mise en position repos du bras VAT et déploiement du bras potence (4) supportant la perche de mise au rail (6) au-dessus de la caténaire grâce au vérin pivotant (7) du bras potence de VAT (3) ;
- mise en contact de la perche de mise au rail (6) avec la caténaire (11) grâce au vérin d'élévation (10) du bras potence de mise au rail (4), et aux capteurs de sécurité (18) pour ajuster le guidage et assurer le placement correct ;
- si le résultat de la VAT est incorrect, l'information est transmise à l'automate de sécurité (14).

## Patentansprüche

1. Automatische Erdungsvorrichtung (1) zur Spannungsfreiheitsermittlung und Erdung einer Fahrleitung (11) eines Eisenbahngleises, wobei die Vorrichtung (1) einen Mast (2) umfasst, an dem sich befinden:
- ein erster, als "Spannungsfreiheitsermittlung" bezeichneter Auslegerarm (3), umfassend eine Spannungsfreiheitsermittlungsstange (5), auf der eine Vorrichtung zur Spannungsfreiheitsermittlung, VAT-Vorrichtung, (12) angeordnet ist, die mit einem Haken (19) ausgestattet ist;
- ein zweiter, als "Erdung" bezeichneter Auslegerarm (4), umfassend eine Bahnerdungsstange (6) mit einem Stangenkopf (20) und ein Potentialausgleichskabel (13), das während der Verwendung die Verbindung der Fahrleitung (11) mit der Schiene des Eisenbahngleises ermöglicht;
- ein Automatisierungssystem, das eine Sicherheitssensoranordnung (18) für beide Auslegerarme (3, 4) und eine Sicherheitssteuerung (14) zur Überwachung der Position der Auslegerarme (3, 4) umfasst;
wobei jeder Auslegerarm (3, 4) über einen Schwenkzylinder (7, 8) und einen Hubzylinder (9, 10) mit dem Mast (2) verbunden ist, die es ermöglichen, die Position der Auslegerarme (3, 4) unabhängig voneinander mittels der Sicherheitssteuerung (14) zu verändern, um die Spannungsfreiheitsermittlungsstange (5) und/oder die Bahnerdungsstange (6) von einer Ruhestellung in eine Arbeitsstellung zu bringen, wobei die Arbeitsstellung eine Position ist, in der die Vorrichtung zur Spannungsfreiheitsermittlung (12) die Spannung der Fahrleitung (11) prüfen kann und das Verbindungskabel (13) die Fahrleitung (11) während einer Wartungsmaßnahme erden kann.

2. Automatische Erdungsvorrichtung (1) nach einem der vorhergehenden Ansprüche, **dadurch gekennzeichnet, dass** die Zylinder (7, 8, 9, 10) Antriebe zur Bewegung der Auslegerarme (3, 4) umfassen.

3. Automatische Erdungsvorrichtung (1) nach einem der vorhergehenden Ansprüche, **dadurch gekennzeichnet, dass** die Sicherheitssensoren (18) Positionssensoren der Auslegerarme (3, 4) und/oder der Stangen (5, 6) oder Endlagensensoren der Zylinder (7, 8, 9, 10) sind.

4. Automatische Erdungsvorrichtung (1) nach einem der vorhergehenden Ansprüche, **dadurch gekennzeichnet, dass** die Sicherheitssensoren (18) und die VAT-Vorrichtung (12) mit der Sicherheitssteuerung (14) verbunden sind, um dieser die zu verarbeitenden Signale zur Ermittlung der Positionen der beiden Auslegerarme (3, 4), des Betriebszustands der VAT-Vorrichtung (12) und zur Bestätigung der Spannungsfreiheit der Fahrleitung (11) zu liefern.

5. Automatische Erdungsvorrichtung (1) nach Anspruch 1, **dadurch gekennzeichnet, dass** sie ein hermetisch abgedichtetes Gehäuse (16) mit kontrollierter Atmosphäre umfasst, um die notwendigen Lagerungsbedingungen der Vorrichtung zur Spannungsfreiheitsermittlung (12) zu gewährleisten.

6. Automatische Erdungsvorrichtung (1) nach Anspruch 1, **dadurch gekennzeichnet, dass** die VAT-Vorrichtung (12) mit einer Selbsttestfunktion ausgestattet ist, um den ordnungsgemäßen Betrieb der VAT-Vorrichtung (12), den Zustand der Versorgungbatterie der VAT-Vorrichtung (12) und den Zustand des Erdungskabels (13) zu überprüfen.

7. Automatische Erdungsvorrichtung (1) nach einem der vorhergehenden Ansprüche, **dadurch gekennzeichnet, dass** sie eine Wartungsplattform (15) umfasst, die den Zugang zu der automatischen Erdungsvorrichtung (1) ermöglicht.

8. Automatische Erdungsvorrichtung (1) nach Anspruch 7, **dadurch gekennzeichnet, dass** sie eine Zugangsleiter (17) umfasst, um die Wartungsplattform (15) zu erreichen.

9. Automatische Erdungsvorrichtung (1) nach Anspruch 8, **dadurch gekennzeichnet, dass** sie ein Verriegelungssystem für die Leiter (17) umfasst, das den Zugang zu der Plattform (15) verhindert, solange das Erdungsverfahren nicht ordnungsgemäß abgeschlossen ist.

10. Automatische Erdungsvorrichtung (1) nach einem der vorhergehenden Ansprüche, **dadurch gekennzeichnet, dass** das Potentialausgleichskabel (13) ein zugelassenes Kabel mit einem Querschnitt von 95 mm² ist, das während der Verwendung den Potentialausgleich zwischen der Bahnerdungsstange (5) und der Schiene herstellt.

11. Automatische Erdungsvorrichtung (1) nach Anspruch 10, **dadurch gekennzeichnet, dass** sie einen Metallstift umfasst, der sich für die Selbsttestphasen der VAT in der Ruhestellung mit Potentialausgleich zu der Schiene befindet.

12. Automatische Erdungsvorrichtung (1) nach einem der vorhergehenden Ansprüche, **dadurch gekennzeichnet, dass** sie eine Verbindung zu einer ausgelagerten Steuerung umfasst, damit ein Bediener mit der Sicherheitssteuerung (14) kommunizieren kann.

13. Verfahren zum Überführen eines Auslegerarms (3, 4) der automatischen Erdungsvorrichtung (1) nach einem der Ansprüche 1 bis 12 von der Ruhestellung in die Arbeitsstellung, umfassend die folgenden Schritte:
- die Auslegerarme (3, 4) befinden sich in der Ruhestellung;
- der Schwenkzylinder (7, 8) schwenkt den Auslegerarm (3, 4) in eine Zwischenstellung, so dass der Auslegerarm (3, 4) senkrecht zur Fahrleitung (11) steht, wobei die Stange (5, 6) über der Fahrleitung (1) positioniert ist, ohne mit der Fahrleitung (11) in Kontakt zu sein;
- der Hubzylinder (9, 10) senkt durch vertikale Translation den Auslegerarm (7, 8) in die Arbeitsstellung ab, so dass der Stangenkopf (19) mit der Fahrleitung (11) in Kontakt ist;
wobei die Schritte des Verfahrens unabhängig voneinander gesteuert werden können und auch in umgekehrter Richtung, um den Auslegerarm (3, 4) von der Arbeitsstellung in die Ruhestellung zu bringen.

14. Verfahren zur Sicherung des Gleises mittels der automatischen Erdungsvorrichtung (1) nach einem der Ansprüche 1 bis 12, umfassend die folgenden Schritte:
- Anforderung der Sicherung des Gleises, auf dem der Eingriff erfolgen soll, beispielsweise über die ausgelagerte Steuerung, an die Sicherheitssteuerung (14);
- Bestätigung durch die Sicherheitssteuerung (14), dass die Fahrleitung (11) spannungsfrei ist, und Senden eines Befehls zur Spannungsfreiheits-Prüfung und zum Erden an die Erdungsvorrichtung (1);
- vorzugsweise Selbsttestverfahren der Vorrichtung zur Spannungsfreiheitsermittlung (12) durch die Sicherheitssteuerung (14);
- Ausfahren des Auslegerarms (3), der die Vorrichtung zur Spannungsfreiheitsermittlung (12) trägt, über die Fahrleitung (11) mittels des Schwenkzylinders (7) des VAT-Auslegerarms (3);
- Kontaktieren der VAT-Stange (5) mit der Fahrleitung (11) mittels des Hubzylinders (9) des VAT-Auslegerarms (3) und der Sicherheitssensoren (18) zur Führungskorrektur und zur Sicherstellung der korrekten Platzierung;
- Messen der Restspannung an der Fahrleitung (11) durch die Vorrichtung zur Spannungsfreiheitsermittlung (12) und Übermittlung des Ergebnisses an die Sicherheitssteuerung (14);
- wenn das Ergebnis der VAT korrekt ist, Rückführung des VAT-Arms in die Ruhestellung und Ausfahren des Auslegerarms (4), der die Bahnerdungsstange (6) trägt, über die Fahrleitung mittels des Schwenkzylinders (7) des VAT-Auslegerarms (3);
- Kontaktieren der Bahnerdungsstange (6) mit der Fahrleitung (11) mittels des Hubzylinders (10) des Erdungs-Auslegerarms (4) und der Sicherheitssensoren (18) zur Führungskorrektur und zur Sicherstellung der korrekten Platzierung;
- wenn das Ergebnis der VAT nicht korrekt ist, wird die Information an die Sicherheitssteuerung (14) übertragen.

## Claims

1. Automatic catenary earthing device (1) for verifying voltage absence and connecting a railway catenary (11) to the earth, the device (1) comprising a mast (2) on which are included:
- a first cantilever arm (3) referred to as " voltage absence testing " comprising a catenary pole (5) on which is positioned a voltage absence testing (VAT) device, (12) equipped with a hook (19);
- a second cantilever arm (4) referred to as "earth connection" comprising an earth connection pole (6) with a pole head (20) and an equipotential bonding cable (13) allowing, in use, to connect the catenary (11) to the earthing of the railway track;
- an automation system comprising a set of safety sensors (18) of the two cantilever arms (3, 4) and a safety control unit (14) to control the position of the cantilever arms (3, 4);
each cantilever arm (3, 4) being connected to the mast (2) by a pivoting actuator (7, 8) and a lifting actuator (9, 10) allowing the position of the cantilever arms (3, 4) to be changed independently using the safety control unit (14) in order to move the voltage absence verification pole (5) and/or the earth connection pole (6) from a rest position to a working position, the working position being a position wherein the voltage absence verification device (12) can check the voltage of the catenary (11) and the bonding cable (13) can earth the catenary (11) during a maintenance operation.

2. The automatic catenary earthing device (1) according to any one of the preceding claims, **characterized in that** the actuators (7, 8, 9, 10) comprise actuators to set in motion the cantilever arms (3, 4).

3. The automatic catenary earthing device (1) according to any one of the preceding claims, **characterized in that** the safety sensors (18) are position sensors of the cantilever arms (3, 4) and/or the poles (5, 6), or the end-of-travel sensors of the actuators (7, 8, 9, 10).

4. The automatic catenary earthing device (1) according to any one of the preceding claims, **characterized in that** the safety sensors (18) and the VAT device (12) are connected to the safety control unit (14) in order to provide it with the signals to be processed to know the positions of the two cantilever arms (3, 4), the operating status of the VAT device (12), and the confirmation of voltage absence on the catenary (11).

5. The automatic catenary earthing device (1) according to claim 1, **characterized in that** it comprises a waterproof box (16) with controlled atmosphere to guarantee the necessary storage conditions of the voltage absence testing device (12).

6. The automatic catenary earthing device (1) according to claim 1, **characterized in that** the VAT device (12) is equipped with a self-test function allowing to ensure the proper operation of the VAT device (12), the state of the power supply battery of the VAT device (12) and the state of the earth bonding cable (13).

7. The automatic catenary earthing device (1) according to any one of the preceding claims, **characterized in that** it comprises a maintenance walkway (15) allowing access to the automatic catenary earthing device (1).

8. The automatic catenary earthing device (1) according to claim 7, **characterized in that** it comprises an access ladder (17) to access the maintenance walkway (15).

9. The automatic catenary earthing device (1) according to claim 8, **characterized in that** it comprises a locking system for the ladder (17) which prevents access to the walkway (15) as long as the earthing procedure is not properly completed.

10. The automatic catenary earthing device (1) according to any one of the preceding claims, **characterized in that** the equipotential bonding cable (13) is a certified 95mm² cable providing the equipotential connection, in use, between the earthing connection pole (5) and the rail.

11. The automatic catenary earthing device (1) according to claim 10, **characterized in that** it comprises a metal pin placed in the rest position with equipotential connection to the earth, for the VAT self-test phases.

12. The automatic catenary earthing device (1) according to any one of the preceding claims, **characterized in that** it comprises a connection with a remote control unit so that an operator can communicate with the safety control unit (14).

13. Method for moving a cantilever arm (3, 4) of the automatic catenary earthing device (1) according to one of claims 1 to 12, from the rest position to the working position, comprising the following steps:
- -the cantilever arms (3, 4) are positioned in the rest position;
- the pivot actuators (7, 8) pivot the cantilever arms (3, 4) into an intermediate position in such a way that the cantilever arms (3, 4) are perpendicular to the catenary (11), the pole (5, 6) being positioned above the catenary (11) without being in contact with the catenary (11);
- the lifting actuator (9, 10) lowers by vertical translation the cantilever arms (7, 8) into the working position so that the pole head (19) is in contact with the catenary (11);
the steps of the method being able to be controlled independently, and also in reverse to move the cantilever arms (3, 4) from the working position toward the rest position.

14. The method for securing the track using the automatic catenary earthing device (1) according to one of claims 1 to 12, comprising the following steps:
- request for securing the track on which the intervention is to be carried out, for example via the remote control unit, to the safety control unit (14);
- confirmation by the safety control unit (14) that the catenary (11) is de-energized, and sending of a voltage absence testing and earthing order to the earthing device (1);
- preferably, self-test procedure of the voltage absence testing device (12) by the safety control unit (14);
- extension of the cantilever arm (3) supporting the voltage absence testing device (12) above the catenary (11) by means of the pivoting actuator (7) of the VAT cantilever arm (3);
- bringing the VAT pole (5) into contact with the catenary (11) by means of the lifting actuator (9) of the VAT cantilever arm (3), and the safety sensors (18) to adjust the guidance and ensure correct placement;
- measurement of the residual voltage on the catenary (11) by the voltage absence testing device (12) and sending of the result to the safety control unit (14);
- if the VAT result is correct, placing the VAT arm in the rest position and extending the cantilever arm (4) supporting the earth placement pole (6) over the catenary by means of the pivoting actuator (7) of the earthing cantilever arm (3);
- bringing the earth placement pole (6) into contact with the catenary (11) by means of the lifting actuator (10) of the earth placement cantilever arm (4), and the safety sensors (18) to adjust the guidance and ensure correct placement;
- if the VAT result is incorrect, the information is transmitted to the safety control unit (14) device.
